# EUROPÄISCHE PATENTSCHRIFT

(11) **EP 2 208 082 B1**
(45) Veröffentlichungstag und Bekanntmachung des Hinweises auf die Patenterteilung: **14.12.2016**
(21) Anmeldenummer: 08843573.0
(22) Anmeldetag: 17.10.2008
(51) Int. Cl.: G01S 1/72, B63C 7/26

(54) **ORTUNGSBAKE**
LOCATION BEACON
BALISE DE LOCALISATION

(30) Priorität: 30.10.2007 DE 102007052177
(43) Veröffentlichungstag der Anmeldung: 21.07.2010
(73) Patentinhaber: Novega Produktonssysteme Gmbh, 87477 Sulzberg (DE)
(72) Erfinder: BERZ, Martin, 87787 Wolfertschwenden (DE); BEYERLE, Martin, 87748 Martinszell (DE); GÜNTHER, Gerhard, 87448 Waltenhofen (DE)
(74) Vertreter: Fiener, Josef
(86) Internationale Anmeldenummer: PCT/EP2008/008789
(87) Internationale Veröffentlichungsnummer: WO 2009/056238

(56) Entgegenhaltungen:
- EP-A- 1 244 067
- DE-A1- 3 715 099
- US-A- 5 708 363
- US-A- 5 710 989

## Beschreibung

Die Erfindung betrifft eine Ortungsbake mit den oberbegrifflichen Merkmalen des Anspruchs 1 sowie ein Verfahren zur Aktivierung der Emission von Schallsignalen nach Anspruch 8.

Daten-Recorder-Systeme werden vor allem im Luftfahrtbereich verwendet, um nach Abstürzen oder sonstigen Unfällen eine Rekonstruktion der Unfallursachen durchführen zu können. Die Systeme zeichnen dabei die Fahrzeug- und Umweltparameter, wie beispielsweise Flughöhe, Reisegeschwindigkeit, Temperatur und Druck, in einer Endlosschleife auf. Zusätzlich wird der gesamte Funkverkehr während der Reise aufgenommen. Die Daten-Recorder-Systeme sind dabei so robust gestaltet, dass selbst Brände und Kollisionen sowie ein ungebremstes Aufschlagen aus großer Höhe diese nicht zerstören. Um die Daten-Recorder-Systeme auch im Wasser wieder auffinden zu können, verfügen diese über eine Ortungsbake, die nach Kontakt mit Wasser aktiviert wird und beginnt, über einen Zeitraum von mehreren Tagen bis Wochen ein Ultraschallsignal abzusetzen, das von Bergungsschiffen mit entsprechenden Ortungsgeräten detektiert wird.

Die Mindestfunktionen für Ortungsbaken sind in den Normen SAE AS 8045 bzw. DIN EN 61996 festgelegt. Dort sind u.a. Parameter wie Arbeitsfrequenz, Mindest- und Maximaleinsatztiefe, Pulslänge und Pulswiederholungsrate sowie Mindestbetriebsdauer, Signalausgabestärke und Arbeitstemperatur definiert. Die Normen verlangen beispielsweise, dass die Ortungsbake ab einer Wassertiefe von 15 Zentimeter aktiviert wird und eine Mindestbetriebsdauer von 30 Tagen aufweist. Eine Aktivierung der Ortungsbake findet nach Eintauchen der beiden Pole in Wasser statt. Beim Einsatz entsprechender Systeme auf Schiffen sind diese jedoch rauen Umweltbedingungen auf See ausgesetzt.

Die bekannten gleichstrombetriebenen Ortungsbaken weisen meist an einer Stirnfläche des Gehäuses einen ersten Pol und als zweiten Pol die Gehäuseummantelung auf. Bei kurzem Flüssigkeitskontakt kommt es zu einem Schließen des Stromkreises und dadurch zur Aktivierung der Signalemission. Während Daten-Recorder-Systeme in Flugzeugen außer in Notsituationen praktisch nie in Kontakt mit Flüssigkeiten kommen, sind die auf Schiffen verwendeten Systeme ständig der Witterung sowie aufspritzender Gischt oder bei der Reinigung an Deck eingesetzten Flüssigkeiten ausgesetzt. Aufgrund der dauernden Benetzung mit Flüssigkeit kommt es zu einer ständigen Aktivierung der Ortungsbake. Diese dauernde Aktivierung wirkt sich mit auf die Betriebsdauer der Batterie aus, so dass es wegen einer teilweise entladenen Batterie zu eingeschränkter Signalstärke und Betriebsdauer der Ortungsbake in einer Notsituation kommen kann.

Um eine frühzeitige Aktivierung der Signalemission zu verhindern, schlägt die EP 0 024 267 vor, den Schalter mit einer drucksensitiven Membran zu überziehen, so dass eine Aktivierung des Schalters für die Signalemission erst bei entsprechender Druckbeaufschlagung und somit erst ab einer definierten Wassertiefe erfolgt. Nachteilig an dieser Ausführungsform ist, dass die Aktivierung erst ab einer nicht normgerechten Wassertiefe erfolgt und zum anderen der Einbau einer Membran eine wesentlich aufwändigere Konstruktion des Schalters erfordert.

Die EP 1 244 067 A beschreibt eine Ortungsbake, insbesondere zum Einsatz in marinen Daten-Recorder-Systemen , umfassend ein Gehäuse, eine Aktivierungseinheit zur Signalabgabe, wenigstens zwei Pole geeignet zur Leitfähigkeitsmessung von Flüssigkeiten sowie eine Stromversorgungseinheit. Zur Betriebsdauer der Batterie erfolgen keine weiteren Angaben.

Die US 5 708 363 A offenbart ein Verfahren zur Messung der Leitfähigkeit von Flüssigkeiten, wobei eine Wechselspannung zum Einsatz kommt. Dieses System ist insbesondere für Laboratorien und Fabriken gedacht, wo eine permanente Stromversorgung vorliegt.

Aufgabe der vorliegenden Erfindung ist es daher, eine Ortungsbake zur Verfügung zu stellen, die bereits ab geringen Wassertiefen aktivierbar ist, nur bei dauerhaftem Flüssigkeitskontakt aktiviert bleibt, somit eine zu starke Entladung der Batterie außerhalb von Notsituationen wirkungsvoll verhindert, und zudem einfach herzustellen ist.

Diese Aufgabe wird mit einer Ortungsbake gemäß Anspruch 1 sowie durch ein Verfahren gemäß Anspruch 8 gelöst. Vorteilhafte Weiterbildungen der Erfindung sind Gegenstand der abhängigen Ansprüche.

Die erfindungsgemäße Ortungsbake, die sich insbesondere zum Einsatz in marinen Daten-Recorder-Systemen eignet, umfasst dabei ein Gehäuse, eine Aktivierungseinheit zur Signalabgabe, wenigstens zwei Pole zur Leitfähigkeitsmessung von Flüssigkeiten sowie eine Stromversorgungseinheit. Die Ortungsbake ist dadurch gekennzeichnet, dass die Spannung an den Polen als Wechselspannung anliegt und die Aktivierungseinheit von einem Controller gesteuert ist. Zudem weist die Steuerung dabei einen Ruhezustand auf und wird durch Flüssigkeitskontakt beider Pole aus dem Ruhezustand aktiviert. Weiterhin ist ein Controller vorgesehen, der erst nach Ablauf eines Prüfschemas die Signalabgabe betätigt. Hierbei erfolgt bei Flüssigkeitskontakt beider Pole zunächst eine Messung der Leitfähigkeit des Umgebungsmediums an den Polen sowie der Vergleich des gemessenen Ist-Wertes für die Leitfähigkeit mit einem definierten Schwellenwert.

Die Ortungsbake ist an die Umweltbedingungen auf hoher See angepasst und weist bevorzugt eine keramische Beschichtung auf, wodurch Ablagerungen wirkungsvoll unterbunden werden. Die Ortungsbake kann dabei als Zylinder ausgebildet sein; es ist jedoch auch denkbar, eine andere Gehäuseform zu verwenden. Die beiden Pole, die z. B. aus Gold oder einem vergleichbar leitfähigen Edelmetall gefertigt sein können, sind insbesondere jeweils an den Stirnseiten der Ortungsbake angeordnet. Durch diese Anordnung der Pole wird außerhalb von Notsituationen eine gleichzeitige Flüssigkeitsbenetzung beider Pole, die zur Aktivierung des Einschaltmechanismus für die Signalemission führen würde, weitgehend unterbunden. Zur Stromversorgung der Ortungsbake eignen sich vor allem wiederaufladbare Akkus oder Lithium-Ionen-Batterien, da diese eine hohe Energiedichte stellen und zudem pulsfähig sind. Durch die als Wechselspannung an den Polen anliegende Spannung wird eine längere Batterielebensdauer erzielt und die Ortungsbake zudem vor einer vorschnellen Aktivierung der Signalemission außerhalb von Notsituationen geschützt. Zudem ergibt sich hierdurch ein besserer Korrosionsschutz, da Gleichstrom zwischen den Polen vermieden wird.

Eine unnötige und zudem dauerhafte Aktivierung der Signalemission wird außerdem durch eine Steuerung verhindert, die für die Aktivierungseinheit vorgesehen ist.

Wird ein definierter Schwellenwert für die Leitfähigkeit überschritten, erfolgt eine Aktivierung der Steuerung, die sich bis zur Aktivierung in einem Ruhezustand (sleep mode) befindet. Nach Durchlauf mehrerer Messzyklen, die zur Bestätigung einer definierten Anzahl von Schwellenwertüberschreitungen dienen, erfolgt die Aktivierung der Signalabgabe. Bei dem emittierten Signal handelt es sich insbesondere um ein Ultraschallsignal, das von Bergungsschiffen mit Hilfe entsprechender Ortungsgeräte empfangen werden kann und das Bergungsschiff somit an die Fundstelle heranführt.

Als besonders vorteilhaft erweist sich, wenn das Ultraschallsignal als gepulstes und/oder dauerhaftes Ultraschallsignal abgegeben wird. Es kann dabei auch die Emission eines dauerhaften Ultraschallsignals auf einer Frequenz sowie die Emission eines gepulsten Ultraschallsignals auf einer weiteren Frequenz erfolgen. Als günstig wird in diesem Zusammenhang auch angesehen, wenn die Signalfrequenz und/oder die Pulssignatur des Ultraschallsignals konfiguriert ist. Somit kann jedem mit der Ortungsbake ausgerüsteten Schiff oder Gegenstand ein eigenes Signal oder eine charakteristische Pulssignatur zugeordnet werden, so dass das aufgefundene System eindeutig einem bestimmten Schiff oder Gegenstand zugeordnet werden kann. So können beispielsweise Gefahrgutcontainer, deren Bergung vorrangig betrieben werden sollte, mit Systemen ausgerüstet werden, deren Ortungsbake eine andere Pulssignatur aufweist als Container mit weniger gefährlichen Gütern. Über die Pulssignatur bzw. die Signalfrequenz kann so gezielt nach den entsprechenden Containern gesucht werden.

Das Signal kann dabei im Frequenzbereich von 25 bis 50 kHz emittiert werden, die Pulslänge kann zwischen 1 und 15 ms und die Puls-Wiederholungsrate bei 0,5 bis 1,5 Pulsen pro Sekunde liegen. Als empfehlenswert wird in diesem Zusammenhang erachtet, wenn zur Emission der Signale ein piezoelektrischer Signalgeber in der Ortungsbake vorgesehen ist. Als besonders günstig wird angesehen, wenn die Ortungsbake eine Speichereinheit aufweist, aus der Werte für die Beurteilung des aktuellen Batterieladezustandes ausgelesen werden können. In der Speichereinheit werden Werte für die Häufigkeit der Aktivierung abgelegt. Anstelle dieser Werte, oder zusätzlich zu diesen, können Werte für die Dauer der Signalemission gespeichert werden.

Zum Auslesen der gespeicherten Werte weist die Ortungsbake bevorzugt auch eine Schnittstelle für ein entsprechendes Datenverarbeitungsgerät auf. Als Schnittstelle kann dabei auch eine kabellose Verbindung, beispielsweise eine Bluetooth-Schnittstelle, verwendet werden, wobei der Sender dann im Innern des Gehäuses angeordnet wird. Die Ausgabe von relevanten Werten kann auch als Binärsignal erfolgen, das mittels eines Oszilloskops oder dgl. an den beiden Polen abgenommen und dann ausgewertet wird. Dadurch wird auch eine Prüfung der Funktionsfähigkeit sowie des Ladezustandes der Batterie normgerecht, d.h. bei eingebauter Ortungsbake möglich.

Das erfindungsgemäße Verfahren zur Aktivierung einer Emission von Signalen eignet sich insbesondere zur Emissionen gepulster und/oder dauerhafter Ultraschallsignale mit definierter Frequenz, die mittels einer oben beschriebenen Ortungsbake emittiert werden. Das Verfahren umfasst mehrere Schritte.

Nach Flüssigkeitskontakt beider Pole erfolgt zunächst die Aufnahme von Ist-Werten für die Leitfähigkeit des Umgebungsmediums an den Polen. Die ermittelten Ist-Werte werden mit einem definierten Schwellenwert für die Leitfähigkeit verglichen. Bei Überschreiten des definierten Schwellenwertes erfolgt eine Aktivierung einer im Ruhezustand befindlichen Steuerung. Anschließend wird eine Sequenz von Messzyklen durchlaufen, um eine definierte Anzahl von Schwellenwertüberschreitungen durch die Steuerung zu bestätigen. Die Dauer der Sequenz sowie die Anzahl von notwendigen Schwellenwertüberschreitungen ist z. B. im Controller abgelegt. Wird die vorab definierte Anzahl von Schwellenwertüberschreitungen bestätigt, erfolgt die Signalabgabe z. B. in Form gepulster Ultraschallsignale. Erfolgt die Bestätigung einer definierten Anzahl von Schwellenwertüberschreitungen nicht, kommt es also zu einer Unterschreitung der definierten Anzahl, kehrt die Steuerung bzw. Aktivierungseinheit in ihren Ruhezustand zurück.

Vorteilhafterweise weist das erfindungsgemäße Verfahren einen zusätzlichen Schritt auf, der vorsieht, innerhalb eines einstellbaren Zeitintervalls nach Aktivierung eine zusätzliche Kontrollmessung durchzuführen. Wird hierbei die Schwellenwertüberschreitung bestätigt, wird die Emission von Signalen aufrechterhalten. Wird bei der Kontrollmessung jedoch festgestellt, dass der Schwellenwert unterschritten wird, erfolgt eine Rückkehr der Steuerung in den Ruhezustand. Die Zeitintervalle können dabei so eingestellt sein, dass sich die Intervalldauer jeweils um einen definierten Wert verlängert. Durch diese Kontrollmessung kann ausgeschlossen werden, dass die Aktivierung der Signalemission lediglich aufgrund einer Flüssigkeitsbenetzung, beispielsweise durch Schlagwasser, nicht jedoch aufgrund eines Eintauchens der Ortungsbake in Wasser erfolgte. Das Ultraschallsignal wird somit nur aufrechterhalten, wenn sich die Ortungsbake, beispielsweise bei Havarie des Schiffes, dauerhaft im Wasser befindet. Ist dies nicht der Fall, besteht also keine Veranlassung zu fortgesetzter Schallemission, wird durch Abbruch der Schallemission und Rückkehr der Steuerung in den Ruhezustand eine weitergehende Entladung der Batterie verhindert und somit deren Lebensdauer verlängert.

Günstigerweise erfolgt eine Speicherung von Werten für die Häufigkeit der Aktivierung. Gleichzeitig oder ersatzweise mit der Speicherung dieser Werte können auch Werte für die Dauer der Signalemission gespeichert werden. Die gespeicherten Werte können bei routinemäßiger Überprüfung zur Abschätzung der Restlebensdauer der Batterie herangezogen werden. Das erfindungsgemäße Verfahren eignet sich somit zur Aktivierung der Signalemission und verhindert dabei gleichzeitig eine ungewollte und unnötige Signalemission, da eine länger andauernde Signalemission nur bei tatsächlichem und dauerhaftem Flüssigkeitskontakt beider Pole erfolgt.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen Zeichnungen. Es zeigt:
Fig. 1 eine bevorzugte Ausführungsform eines Daten-Recorder-Systems,
Fig. 2 eine bevorzugte Ausführungsform der Ortungsbake, und
Fig. 3 eine schematische Darstellung des erfindungsgemäßen Verfahrens.

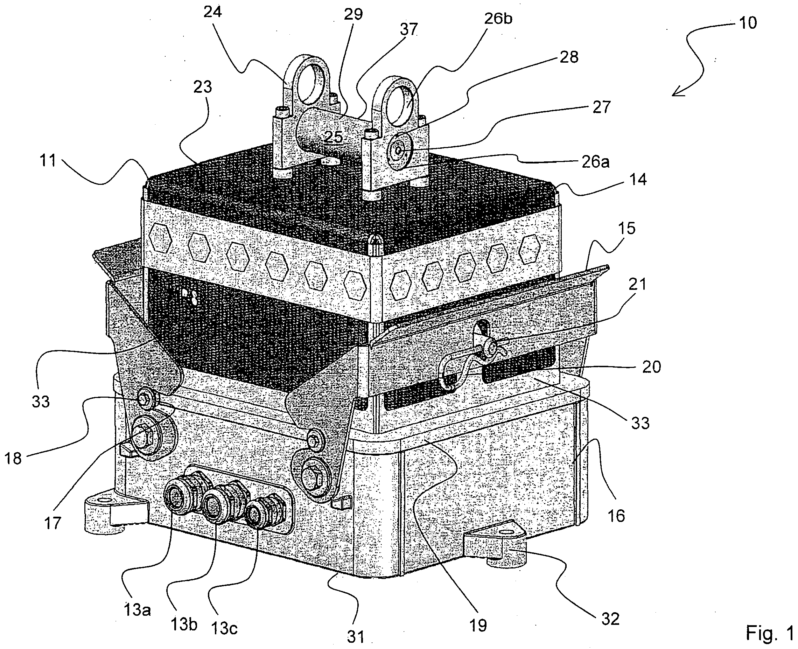

Fig. 1 zeigt ein Daten-Recorder-System 10, das insbesondere auf Schiffen verwendet wird. Das gezeigte System 10 umfasst dabei ein Gehäuse 11, das an seiner dem Betrachter zugewandten Vorderseite drei Anschlüsse 13a, b, c für Datenleitungen aufweist. Im Gehäuse 11 befinden sich Aufzeichnungsgeräte für die aktuellen Umweltdaten, die aktuellen Schiffsdaten sowie ein Aufzeichnungsgerät für den Funkverkehr. In einer Endlosschleife aufgezeichnet werden dabei beispielsweise Niederschlagswerte, Windrichtung und Windstärke, Außentemperatur, Wassertemperatur, Fahrgeschwindigkeit und gefahrener Kurs sowie die aktuelle Schiffsposition. Die Aufzeichnungsgeräte befinden sich im oberen Gehäuseteil 14, das eine zusätzliche Isolierung aufweist, um die Aufzeichnungsgeräte vor Wassereintritt, Stößen und zu hohen bzw. zu niedrigen Temperaturen zu schützen. Der obere Gehäuseteil 14 wird über zwei Bügel 15 mit dem unteren Gehäuseteil 16 verbunden. Die Bügel 15 sind schwenkbar am unteren Gehäuseteil 16 angeordnet und weisen Ausnehmungen 17 auf, die mit je einem vorspringenden Haltebolzen 18 am Rand 19 des unteren Gehäuseteils 16 in Eingriff gebracht werden und durch Verschwenken der Bügel 15 die Aufzeichnungsgeräte im oberen Gehäuseteil 14 mit den Datenleitungen, die durch den unteren Gehäuseteil 16 geführt werden, verbinden. Um ein unbeabsichtigtes Öffnen der Bügel 15 zu verhindern, sind diese über einen Splint 20, der mit einem Vorsprung 21 an einer der Schmalseiten des oberen Gehäuseteils 14 in Eingriff gebracht wird, gesichert.

Auf der Oberseite 23 des Gehäuses 11 sind zwei Halterungen 24 angebracht, zwischen denen die Ortungsbake 25 eingesetzt ist. Die Halterungen 24 weisen jeweils zwei übereinander angeordnete, kreisrunde Ausnehmungen 26a, b auf. Über die untere Ausnehmung 26a sind die Pole 27 der Ortungsbake 25 (sowie ggf. eine Schnittstelle 28 für die Ankoppelung eines Datenverarbeitungsgerätes) zugänglich. Bei einer routinemäßigen Überprüfung der Ortungsbake 25 muss diese somit nicht aus den Halterungen 24 entfernt werden.

Eine dauerhafte Aktivierung der Ortungsbake 25 erfolgt bei Eintauchen des Gehäuses 11 und somit der Ortungsbake 25 in Wasser, wodurch die Flüssigkeitsbenetzung der beiden stirnseitigen Pole 27 und dadurch bedingt der Schluss eines Stromkreislaufes erfolgt. Die Ortungsbake 25 weist eine keramische Beschichtung 29 der Mantelfläche 37 auf, auf der sich keine Ablagerungen festsetzen können. Das System 10 verfügt im Bereich des Gehäusebodens 31 über vorspringende Ösen oder Laschen 32, über die das System 10 an Deck eines Schiffes befestigt werden kann. Die in den Halterungen eingesetzte Ortungsbake 25 dient gleichzeitig als Griff, an dem beispielsweise bei der Bergung des Systems 10 ein Bergungsgerät angreifen kann. Die Halterungen 24 für die Ortungsbake 25 können selbstverständlich auch an den Seitenflächen 33 des Gehäuses 11 angeordnet sein.

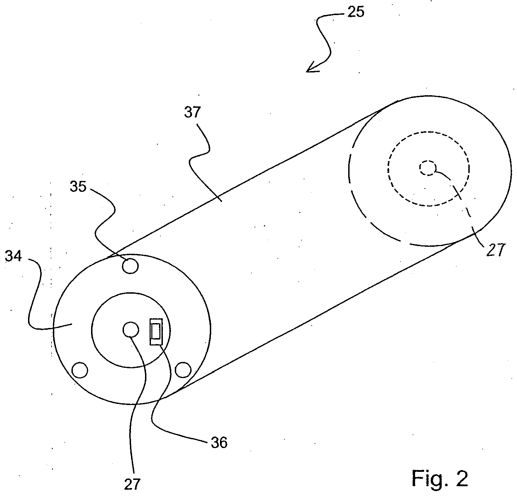

Fig. 2 zeigt die erfindungsgemäße Ortungsbake 25 in perspektivischer Darstellung. Die Ortungsbake 25 ist im Ausführungsbeispiel zylinderförmig ausgebildet und weist an ihren Stirnseiten 34 zentral angeordnete Pole 27 auf. Konzentrisch mit diesen Polen 27 sind drei zusätzliche Ausnehmungen 35 in der Stirnseite 34 eingefügt, in die ein Spezialwerkzeug eingreift, um die als Deckel ausgebildete Stirnseite 34, beispielsweise zum Batteriewechsel, aufschrauben zu können. Zusätzlich kann die Ortungsbake 25 an ihrer Stirnseite 34 eine weitere Schnittstelle 36 aufweisen, die der vorstehend genannten Schnittstelle 28 entsprechen kann und an der zur routinemäßigen Überprüfung der Funktionsfähigkeit der Ortungsbake 25 sowie des Ladezustandes der Batterie ein entsprechendes Messgerät angeschlossen werden kann. Wie oben erwähnt kann dies aber auch direkt an den beiden stirnseitigen Polen 27 (in Form eines ausgelesenen Binärsignals) erfolgen. Die Mantelfläche 37 der Ortungsbake 25 weist im Ausführungsbeispiel der Fig. 2 eine keramische Beschichtung auf.

Bei Eintauchen der Ortungsbake 25 in Wasser, beispielsweise bei Havarie eines Schiffes, kommt es zur Flüssigkeitsbenetzung der beiden, an gegenüberliegenden Stirnseiten 34 des Gehäuses 11 angeordneten Pole 27. Die Pole 27 können somit nicht nur der Aktivierung und Spannungsmessstelle, sondern auch als Diagnoseschnittstelle dienen. An den Polen 27 wird über eine Widerstandsänderung eine Leitfähigkeitsmessung der benetzenden Flüssigkeit durchgeführt, wobei bei Überschreiten eines Schwellenwertes eine Steuerung aus dem Ruhezustand aktiviert wird. Nach Durchlauf einer Sequenz von Messzyklen zur Bestätigung einer definierten Anzahl von Schwellenwertüberschreitungen wird nachfolgend die Emission von Signalen aktiviert. Wird die Ortungsbake 25 beispielsweise lediglich durch Regen, Schlagwasser oder durch an Bord von Schiffen verwendete Reinigungsflüssigkeiten benetzt, verhindert die Steuerung, dass durch die vorübergehende Benetzung der Pole 27 eine unmittelbare Aktivierung der Schallemission erfolgt. Taucht die Ortungsbake 25 jedoch in Wasser ein und sind die Pole 27 somit dauerhaft flüssigkeitsbenetzt, wird die Schallemission aktiviert und aufrechterhalten. Es wird dann ein Ortungssignal im Bereich von 25 bis 50 kHz emittiert, das z. B. einen Schalldruck von 160,5 dB an der Ortungsbake 25 aufweist. Diese Signalemission wird dabei über mindestens 30 Tage aufrechterhalten, so dass die Bergung innerhalb eines relativ großen Zeitfensters erfolgen kann. Nach 30 Tagen weist die Ortungsbake 25 immer noch einen Schalldruck von 157 dB auf. Die in der Fig. 2 dargestellte Ortungsbake 25 ist in Wassertiefen zwischen 15 cm und 6.000 m funktionsfähig und z. B. bei Temperaturen von -2 bis +38°C einsetzbar. Die Stromversorgung der dargestellten Ortungsbake 25 erfolgt über Lithium-Ionen-Batterien.

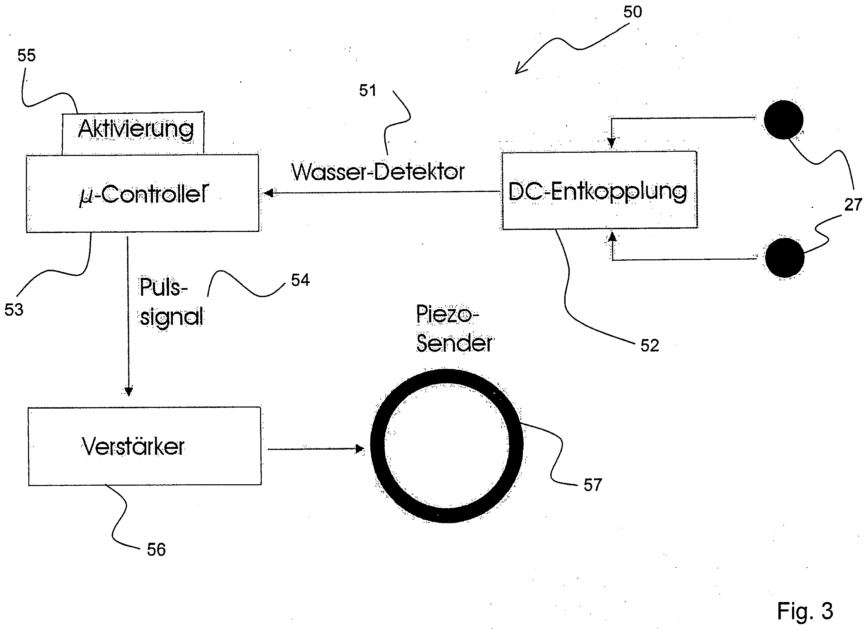

Fig. 3 zeigt in schematischer Darstellung ein Blockschaltbild 50 der Aktivierung der Signalemission. Nach dem Kontakt der Ortungsbake 25 bzw. deren Pole 27 (an denen die Wechselspannung von einem Wechselrichter anliegt, der nicht dargestellt ist, da deren Bauweise z. B. aus den Pkw- und Wohnmobil-Bereich hinlänglich bekannt ist) mit Wasser, beispielsweise nach Eintauchen des Daten-Recorder-Systems 10 im Meer, kommt es zu einer Aktivierung des Wasserdetektors 51 durch Änderung des Widerstands, wobei auch eine DC-Entkopplung 52 vorgesehen ist, um galvanische Ablagerungen zu vemeiden. Das dadurch ausgegebene Signal wird durch einen µ-Controller 53 ausgewertet und führt zum einen zur Ausgabe eines Pulssignals 54, zum anderen zur Aktivierung 55 einer Sequenz von Messzyklen zur Überprüfung des dauerhaften Flüssigkontaktes-der Pole 27. Das vom µ-Controller 53 ausgegebene Pulssignal 54 wird durch einen Verstärker 56 verstärkt und über einen Piezo-Sender 57 an die Umgebung abgegeben und kann anschließend über entsprechende Empfänger an Bord von Bergungsschiffen detektiert werden und den Bergungsschiffen die Position des Systems angeben. Ebenfalls durch den µ-Controller 53 erfolgt ggf. eine Modulation der ausgegebenen Pulssignale 54, so dass diese eine charakteristische Signalfolge und/oder eine eindeutig zuordenbare Signalfrequenz aufweisen.

### Bezugszeichenliste

- 10 =: Daten-Recorder-System
- 11 =: Gehäuse
- 13a,b,c =: Anschlüsse
- 14 =: oberer Gehäuseteil
- 15 =: Bügel
- 16 =: unterer Gehäuseteil
- 17 =: Ausnehmung
- 18 =: Haltebolzen
- 19 =: Rand
- 20 =: Splint
- 21 =: Vorsprung
- 23 =: Oberseite
- 24 =: Halterung
- 25 =: Ortungsbake
- 26a,b =: Ausnehmung
- 27 =: Pol
- 28, 36 =: Schnittstelle
- 29 =: Beschichtung
- 31 =: Gehäuseboden
- 32 =: Lasche
- 33 =: Seitenfläche
- 34 =: Stirnseite
- 35 =: Ausnehmung
- 37 =: Mantelfläche
- 50 =: Blockschaltbild
- 51 =: Wasserdetektor
- 52 =: DC-Entkopplung
- 53 =: µ-Controiier
- 54 =: Pulssignal
- 55 =: Aktivierungseinheit
- 56 =: Verstärker
- 57 =: Piezo-Sender

## Patentansprüche

1. Ortungsbake (25), insbesondere zum Einsatz in marinen Daten-Recorder-Systemen, umfassend:
ein Gehäuse (11),
eine Aktivierungseinheit (55) zur Signalabgabe, insbesondere von Ultraschallsignalen,
wenigstens zwei Pole (27) zur Leitfähigkeitsmessung von Flüssigkeiten, und
eine Stromversorgungseinheit,
**dadurch gekennzeichnet, dass**
an den Polen (27) eine Wechselspannung anliegt und die Aktivierungseinheit (55) von einem Controller (53) gesteuert ist, wobei die Aktivierungseinheit (55) durch Flüssigkeitskontakt der Pole (27) aus einem Ruhezustand aktivierbar ist und der Controller (53) nach Ablauf eines Prüfschemas zur Prüfung der Leitfähigkeitsmessung die Signalabgabe steuert.

2. Ortungsbake (25) nach Anspruch 1, **dadurch gekennzeichnet, dass** die Signalabgabe in Form von gepulsten und/oder dauerhaften Ultraschallsignalen (54) vorgesehen ist.

3. Ortungsbake (25) nach Anspruch 2, **dadurch gekennzeichnet, dass** die Signalfrequenz und/oder Pulssignatur konfigurierbar ist.

4. Ortungsbake (25) nach einem der vorhergehenden Ansprüche,
**dadurch gekennzeichnet, dass**
eine Speichereinheit zur Speicherung der Häufigkeit der Aktivierung und/oder der Dauer der Signalabgabe vorgesehen ist.

5. Ortungsbake (25) nach einem der vorhergehenden Ansprüche,
**dadurch gekennzeichnet, dass**
die Ortungsbake (25) eine keramische Beschichtung (29) aufweist.

6. Ortungsbake (25) nach einem der vorhergehenden Ansprüche,
**dadurch gekennzeichnet, dass**
eine Schnittstelle (28) für ein Datenverarbeitungsgerät vorgesehen ist.

7. Ortungsbake (25) nach einem der vorhergehenden Ansprüche,
**dadurch gekennzeichnet, dass**
ein piezoelektrischer Signalgeber (57) für die Signalabgabe vorgesehen ist.

8. Verfahren zur Aktivierung der Emission von Signalen, insbesondere gepulsten und/oder dauerhaften Ultraschallsignalen (54) definierter Frequenz, mittels einer Ortungsbake (25) nach einem der vorhergehenden Ansprüche, umfassend die Schritte:
- Aufnahme von Ist-Werten für die Leitfähigkeit eines Umgebungsmediums an Polen (27),
- Vergleich der Ist-Werte mit einem definierten Schwellenwert für die Leitfähigkeit,
- Aktivierung (55) einer Steuerung aus einem Ruhezustand bei Überschreiten des definierten Schwellenwertes für die Leitfähigkeit,
- Durchlauf einer Sequenz von Messzyklen zur Bestätigung einer definierten Anzahl von Schwellenwertüberschreitungen durch die Steuerung,
- Betätigung der Signalabgabe bei Bestätigung der definierten Anzahl von Schwellenwertüberschreitungen, oder
- Rückkehr in den Ruhezustand bei Unterschreiten der definierten Anzahl von Schwellenwertüberschreitungen.

9. Verfahren nach Anspruch 8, **dadurch gekennzeichnet, dass**
in einem zeitlich einstellbaren Intervall nach der Aktivierung eine zusätzliche Kontrollmessung des Schwellenwertes durchgeführt wird, wobei bei Bestätigung der Schwellenwertüberschreitung die Emission von Signalen aufrechterhalten wird, oder bei Unterschreiten des Schwellenwertes eine Rückkehr in den Ruhezustand erfolgt.

10. Verfahren nach Anspruch 8 oder 9, **dadurch gekennzeichnet, dass** eine Rückspeicherung von Werten für die Häufigkeit der Aktivierung und/oder die Dauer der Signalemission an eine Speichereinheit erfolgt.

## Claims

1. Location beacon (25), particularly for use in marine data recorder systems, comprising:
a housing (11),
an activation unit (55) for signal output, in particular ultrasonic signals,
at least two poles (27) for measuring the conductivity of liquids, and
a power supply unit,
**characterized in that**
an AC voltage is applied at the poles (27) and the activation unit (55) is controlled by a controller (53), wherein the activation unit (55) is activated by fluid contact between the poles (27) from an idle state, and the controller (53) controls the signal emission after a testing scheme for checking the conductivity measurement.

2. Location beacon (25) according to claim 1, **characterized in that**
the signal output is provided in the form of pulsed and/or permanent ultrasonic signals (54).

3. Location beacon (25) according to claim 2, **characterized in that**
the signal frequency and/or pulse signature is configurable.

4. Location beacon (25) according to any one of the preceding claims, **characterized in that** a memory unit is provided for storing the frequency of the activation and/or the duration of the output signal.

5. Location beacon (25) according to any one of the preceding claims, **characterized in that** the location beacon (25) has a ceramic coating (29).

6. Location beacon (25) according to any one of the preceding claims, **characterized in that** an interface (28) is provided for a data processing device.

7. Location beacon (25) according to any one of the preceding claims, **characterized in that** a piezoelectric transducer (57) is provided for the signal output.

8. Method of activating the emission of signals, in particular pulsed and/or permanent ultrasonic signals (54) of defined frequency, by means of a location beacon (25) according to any one of the preceding claims, comprising the steps:
- recording of actual values for the conductivity of the surrounding medium at poles (27),
- comparing of the actual values with a defined threshold value for the conductivity,
- activating (55) of a controller from an idle state when the defined threshold is exceeded for the conductivity,
- passing a sequence of measurement cycles to confirm a defined number of threshold crossings by the controller,
- operating the signal output on confirmation of the defined number of threshold crossings, or
- returning to the idle state on falling below the defined number of threshold crossings.

9. Method according to claim 8, **characterized in that**
an additional control measurement of the threshold value is performed in a time-adjustable interval after the activation, wherein emission of signals is maintained on confirming exceeding the threshold value, or when falling below the threshold value, a return to the idle state takes place.

10. Method according to claim 8 or 9, **characterized in that**
a back-up storage of values for the frequency of the activation and/or the duration of the signal emission is carried out to a memory unit.

## Revendications

1. Balise de localisation (25), destinée en particulier à l'utilisation dans des systèmes d'enregistrement de données marins, comprenant :
un boîtier (11),
une unité d'activation (55) destinée à l'émission de signaux, en particulier de signaux ultrasonores,
au moins deux pôles (27) destinés à la mesure de la conductivité de liquides, et
une unité d'alimentation électrique,
**caractérisée en ce**
**qu'**une tension alternative est appliquée aux pôles (27) et que l'unité d'activation (55) est commandée par un contrôleur (53), l'unité d'activation (55) étant activable à partir d'un état de repos par contact liquide des pôles (27) et le contrôleur (53) commandant l'émission de signaux au terme d'un schéma de contrôle destiné au contrôle de la mesure de conductivité.

2. Balise de localisation (25) selon la revendication 1, **caractérisée en ce que** l'émission de signaux est prévue sous la forme de signaux ultrasonores (54) pulsés et/ou permanents.

3. Balise de localisation (25) selon la revendication 2, **caractérisée en ce que** la fréquence des signaux et/ou la signature des impulsions est configurable.

4. Balise de localisation (25) selon l'une des revendications précédentes, **caractérisée en ce**
**qu'**une unité de mémorisation pour mémoriser la fréquence d'activation et/ou la durée de l'émission de signaux est prévue.

5. Balise de localisation (25) selon l'une des revendications précédentes, **caractérisée en ce**
**que** la balise de localisation (25) présente un revêtement céramique (29).

6. Balise de localisation (25) selon l'une des revendications précédentes, **caractérisée en ce**
**qu'**une interface (28) pour un équipement de traitement de données est prévue.

7. Balise de localisation (25) selon l'une des revendications précédentes, **caractérisée en ce**
**qu'**un émetteur de signaux piézoélectrique (57) est prévu pour l'émission de signaux.

8. Procédé pour l'activation de l'émission de signaux, en particulier de signaux ultrasonores (54) pulsés et/ou permanents de fréquence définie, au moyen d'une balise de localisation (25) selon l'une des revendications précédentes, comprenant les étapes suivantes :
- capture de valeurs réelles de la conductivité d'un milieu environnant à des pôles (27),
- comparaison des valeurs réelles avec une valeur seuil définie de la conductivité,
- activation (55) d'une commande à partir d'un état de repos en cas de dépassement de la valeur seuil définie de la conductivité,
- exécution d'une séquence de cycles de mesures pour confirmer un nombre défini de dépassements de la valeur seuil par la commande,
- actionnement de l'émission de signaux en cas de confirmation du nombre défini de dépassements de la valeur seuil, ou
- retour dans l'état de repos si le nombre défini de dépassements de la valeur seuil n'est pas atteint.

9. Procédé selon la revendication 8, **caractérisé en ce**
**qu'**une mesure de contrôle supplémentaire de la valeur seuil est effectuée dans un intervalle de temps réglable après l'activation, l'émission de signaux étant maintenue si le dépassement de la valeur seuil est confirmé ou un retour dans l'état de repos ayant lieu si la valeur seuil n'est pas atteinte.

10. Procédé selon la revendication 8 ou 9, **caractérisé en ce**
**qu'**un stockage en retour de valeurs de la fréquence d'activation et/ou de la durée de l'émission de signaux dans une unité de mémorisation est effectué.
